# EUROPÄISCHE PATENTSCHRIFT

(11) **EP 0 872 972 B1**
(45) Veröffentlichungstag und Bekanntmachung des Hinweises auf die Patenterteilung: **10.09.2008**
(21) Anmeldenummer: 98106499.1
(22) Anmeldetag: 08.04.1998
(51) Int. Cl.: H04J 3/06

(54) **Verfahren und Vorrichtung zum Synchronisieren eines Taktgenerators**
Method and circuit for the synchronisation of a clock generator
Méthode et circuit de synchronisation d'un générateur d'horloge

(30) Priorität: 08.04.1997 DE 19714494
(43) Veröffentlichungstag der Anmeldung: 21.10.1998
(73) Patentinhaber: Infineon Technologies AG, 81669 München (DE)
(72) Erfinder: Bötzel, Ulrich, 41564 Kaarst (DE)
(74) Vertreter: Jannig, Peter

(56) Entgegenhaltungen:
- EP-A- 0 437 835
- WO-A-92/01341
- WO-A-94/26032
- DE-A- 19 523 489
- US-A- 5 163 066
- US-A- 5 309 482

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 7, d.h. ein Verfahren und eine Vorrichtung zum Synchronisieren eines Taktgenerators einer Sende/Empfangsstation unter Verwendung eines empfangenen Synchronisationssignals.

Derartige Verfahren und Vorrichtungen finden beispielsweise, aber bei weitem nicht ausschließlich in nach dem DECT-Standard arbeitenden Funksystemen Anwendung, in denen es gilt, eine sogenannte Radio-Network-Termination-Einheit (RNT-Einheit) wie beispielsweise ein schnurloses Telefon, genauer gesagt einen Taktgenerator desselben unter Verwendung eines von einer sogenannten Radio-Base-Station-Einheit (RBS-Einheit) wie beispielsweise einer Basisstation des betrachteten Systems versandten Synchronisationssignals mit dieser (der RBS-Einheit) zu synchronisieren.

Das Synchronisationssignal, unter Verwendung dessen die RNT-Einheit synchronisiert werden soll, wird von der RBS-Einheit in regelmäßigen oder unregelmäßigen zeitlichen Abständen versandt. Die RNT-Einheit empfängt dieses Synchronisationssignal und führt es einem Taktgenerator zu, welcher basierend darauf die Frequenz und/oder die Phasenlage des erzeugten Taktsignals verändern kann.

Eine derartige Synchronisierung ist relativ einfach, wenn und so lange eine RNT-Einheit "nur" immer auf ein und dieselbe RBS-Einheit synchronisiert werden muß. Komplizierter wird die Angelegenheit in mehrzelligen Funksystemen, in denen eine RNT-Einheit wahlweise mit einer von mehreren RBS-Einheiten kommunizieren kann und dementsprechend mit wechselnden RBS-Einheiten synchronisiert können werden muß.

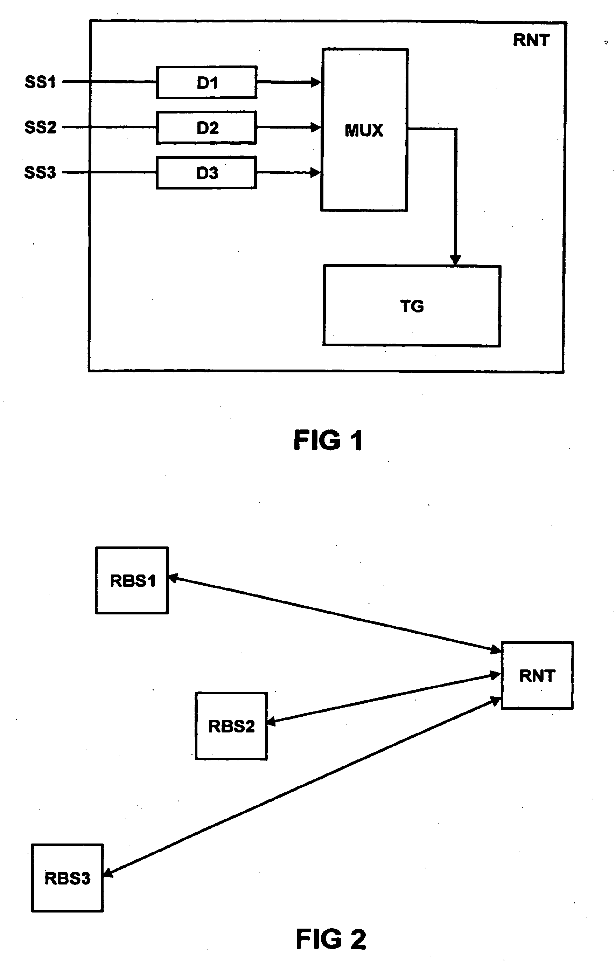

Der prinzipielle Aufbau eines nach dem DECT-Standard arbeitenden mehrzelligen Funksystems ist in Figur 2 veranschaulicht.

Das in der Figur 2 dargestellte Funksystem weist eine RNT-Einheit RNT auf, die wahlweise mit einer von drei RBS-Einheiten RBS1, RBS2, RBS3 in Verbindung treten kann. Jede der RBS-Einheiten versendet eigene Synchronisationssignale, wobei die Synchronisationssignale aller RBS-Einheiten jeweils gleichzeitig versandt werden. Die RNT-Einheit empfängt die Synchronisationssignale aller (oder zumindest mehrerer der) in Reichweite befindlichen RBS-Einheiten, kommuniziert aber nur mit einer der RBS-Einheiten und ist auf diese eine RBS-Einheit synchronisiert.

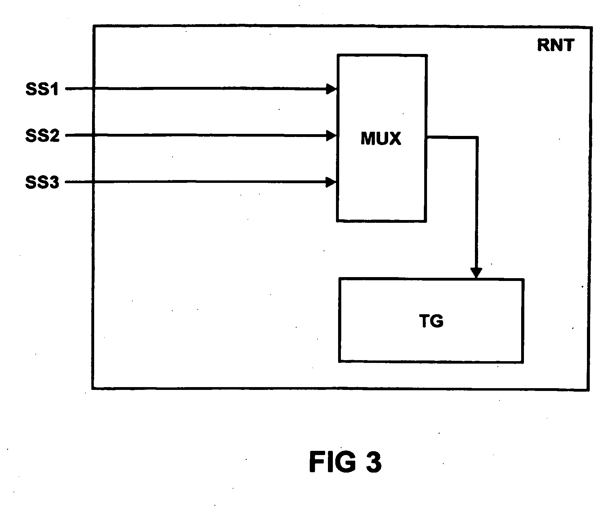

Die RNT-Einheit, genauer gesagt der zur Synchronisationssignalauswertung vorgesehene Teil derselben kann hierzu wie in Figur 3 gezeigt aufgebaut sein.

Die in der Figur 3 gezeigte RNT-Einheit ist für den Empfang von drei Synchronisationssignalen ausgelegt und empfängt im dargestellten Zustand ein erstes Synchronisationssignal SS1 der ersten RBS-Einheit RBS1, ein zweites Synchronisationssignal SS2 der zweiten RBS-Einheit RBS2 und ein drittes Synchronisationssignal SS3 der dritten RBS-Einheit RBS3. Die empfangenen Synchronisationssignale werden einem Multiplexer MUX zugeführt, welcher unter den eingegebenen Synchronisationssignalen dasjenige auswählt und an einen Taktgenerator TG weiterleitet, welches von der RBS-Einheit stammt, mit der die betrachtete RNT-Einheit gerade kommuniziert.

Kommt die RNT-Einheit beispielsweise - aus welchem Grund auch immer - außer Reichweite der ausgewählten RBS-Einheit und wird daraufhin oder aus einem beliebigen anderen Grund automatisch eine andere RBS-Einheit ausgewählt, über die die Kommunikation fortgesetzt werden kann, so muß dem Taktgenerator TG der RNT-Einheit im Ansprechen darauf ein anderes Synchronisationssignal, genauer gesagt das Synchronisationssignal der neu ausgewählten RBS-Einheit zugeführt werden.

Die Erfahrung zeigt, daß ein derartiges Umschalten auf eine andere RBS-Einheit häufig von Störungen in der Nutzdatenübertragung (Sprachsignal- und/oder Datenübertragungen) begleitet ist. Dies kann sich unter ungünstigen Umständen insbesondere im Fall von Datenübertragungen als ein nicht unerheblicher Nachteil erweisen.

EP 437835 sowie DE 19523489 offenbaren jeweils den Oberbegriff des Ansprüche 1 und 7.

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 7 derart weiterzubilden, daß das Umschalten von Verbindungen zwischen mehreren Sende/Empfangsstationen zuverlässig störungsfrei durchführbar ist.

Diese Aufgabe wird erfindungsgemäß durch die im kennzeichnenden Teil des Patentanspruchs 1 beanspruchten Merkmale (Verfahren) bzw. durch die im kennzeichnenden Teil des Patentanspruchs 7 beanspruchten Merkmale (Vorrichtung) gelöst.

Eine solche variierbare Verzögerung des empfangenen Synchronisationssignals vor dessen Verwendung ermöglicht es, das Synchronisationssignal eine beliebig festlegbare und unabhängig von zeitlich veränderlichen Parametern konstant haltbare Zeit nach dem Versenden desselben durch die versendende Sende/Empfangsstation zur Synchronisation zu verwenden. Anders ausgedrückt bedeutet dies, daß der Zeitpunkt, zu dem ein Synchronisationssignal zur Synchronisierung verwendet wird (beispielsweise der Zeitpunkt, zu dem das Synchronisationssignal dem zu synchronisierenden Taktgenerator zugeführt wird), unabhängig von der Laufzeit des Synchronisationssignals von der versendenden Sende/Empfangsstation zu der empfangenden Sende/Empfangsstation gemacht werden kann, so daß unterschiedliche oder wechselnde Entfernungen zwischen den miteinander zu verbindenden Sende/Empfangsstationen keinen Einfluß auf die Synchronisation haben.

Wendet man diese Maßnahme bei einem System an, bei welchem eine Sende/Empfangsstation wahlweise und abwechselnd auf eines von mehreren (von verschiedenen Sende/Empfangsstationen) empfangenen Synchronisationssignalen synchronisiert werden kann und verzögert man sämtliche empfangenen Synchronisationssignale individuell so lange, daß sie zu genau dem selben Zeitpunkt verwendet werden können, so führt dies zu einer dauerhaft stabilen Synchronisierung. Insbesondere ist es dadurch - anders als bei herkömmlichen Verfahren ohne die erfindungsgemäße Synchronisationssignal-Verzögerung - ausgeschlossen, daß beim Umschalten der Verbindung der zu synchronisierenden Sende/Empfangsstation von einer Sende/ Empfangsstation auf eine andere Sende/Empfangsstation Störungen aufgrund eines laufzeitbedingten zeitlichen Versatzes der einander ablösenden Synchronisationssignale auftreten können.

Es wurden mithin ein Verfahren und eine Vorrichtung gefunden, durch welche das Umschalten von Verbindungen zwischen mehreren Sende/Empfangsstationen zuverlässig störungsfrei durchführbar ist.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: ein Blockschaltbild einer zur Durchführung des erfindungsgemäßen Verfahrens geeigneten erfindungsgemäßen Sende/Empfangsstation,
- Figur 2: ein Blockschaltbild eines eine herkömmliche oder eine erfindungsgemäße Sende/Empfangsatation enthaltenden Funksystems, und
- Figur 3: ein Blockschaltbild einer herkömmlichen Sende/ Empfangsstation.

Die im folgenden näher beschriebene, zu synchronisierende Sende/Empfangsstation ist eine RNT-Einheit eines nach dem DECT-Standard arbeitenden mehrzelligen Funksystems. Die besagte RNT-Einheit kann zum Beispiel eine schnurloses Telekommunikationsendeinrichtung (beispielsweise ein schnurloses Telefon), eine über Funk ansprechbare Anschlußdose zum Anschluß "normaler" schnurgebundener Telekommunikationsendeinrichtungen sein. Allerdings besteht hierauf keine Einschränkung; die Erfindung ist auch bei beliebigen anderen Sende/ Empfangsstationen, die unter Verwendung eines empfangenen Synchronisationssignals (insbesondere unter Verwendung eines von mehreren empfangenen Synchronisationssignalen) zu synchronisieren sind.

Der Aufbau des DECT-Funksystems, in welchem die erfindungsgemäß betreibbare RNT-Einheit einsetzbar ist, unterscheidet sich nicht, jedenfalls nicht notwendigerweise von DECT-Funksystemen, die unter Verwendung herkömmlicher RNT-Einheiten aufgebaut sind. Bezüglich des Aufbaus des DECT-Funksystems, in welchem die erfindungsgemäß betreibbare RNT-Einheit einsetzbar ist, kann daher wieder auf Figur 2 verwiesen werden. Demnach umfaßt das betrachtete System die besagte RNT-Einheit RNT und drei RBS-Einheiten (Basistationen), genauer gesagt eine erste RBS-Einheit RBS1, eine zweite RBS-Einheit RBS2, und eine dritte RBS-Einheit RBS3, wobei die RNT-Einheit wahlweise mit der ersten, der zweiten oder der dritten RBS-Einheit in Verbindung treten kann. Die möglichen Verbindungen zwischen der RNT-Einheit und den RBS-Einheiten sind in der Figur 2 durch Doppelpfeile angedeutet.

Auf diejenige RBS-Einheit, mit der die RNT-Einheit in Verbindung steht, ist die RNT-Einheit auch zu synchronisieren. Jede der RBS-Einheiten sendet hierzu in regelmäßigen oder unregelmäßigen Abständen Synchronisationssignale oder als Synchronisationssignale verwendbare und deshalb vorliegend auch als solche bezeichnete Signale, Daten oder Meldungen aus, welche von der zu synchronisierenden RNT-Einheit empfangen und zur Synchronisierung verwendet werden. Die Synchronisationssignale der ersten RBS-Einheit RBS1 werden nachfolgend mit SS1, die der zweiten RBS-Einheit RBS2 mit SS2, und die der dritten RBS-Einheit RBS3 mit SS3 bezeichnet. Die RBS-Einheiten sind untereinander zumindest insoweit synchronisiert, daß die Aussendung der jeweiligen Synchronisationssignale SS1, SS2 und SS3 zeitgleich erfolgt.

Die Synchronisationssignale der RBS-Einheiten werden von der RNT-Einheit empfangen und wie nachfolgend unter Bezugnahme auf die Figur 1 beschrieben ausgewertet und verwendet.

Die Figur 1 zeigt schematisch den Aufbau des Teils der RNT-Einheit, in welchem die empfangenen Synchronisationssignale ausgewertet und verwendet werden. Demnach gelangen die empfangenen Synchronisationssignale SS1, SS2 und SS3 über Zeitverzögerungsglieder D1, D2 und D3 in einen Multiplexer MUX, durch welchen eines der Synchronisationssignale ausgewählt und zu einem Taktgenerator TG durchgeschaltet wird.

Der Taktgenerator TG verwendet das bei ihm ankommende, zeitlich verzögerte Synchronisationssignal zur Frequenz- und/oder Phasensynchronisation des von ihm erzeugten Taktsignals.

Durch die Zeitverzögerungsglieder D1, D2 und D3 können die empfangenen Synchronisationssignale unabhängig voneinander individuell gleich oder beliebig unterschiedlich lange verzögert werden.

Durch die individuellen zeitlichen Verzögerungen wird angestrebt, daß die Synchronisationssignale SS1, SS2 und SS3 unabhängig vom Zeitpunkt des Empfangs durch die RNT-Einheit zum gleichen Zeitpunkt beim Taktsignalgenerator ankämen, wenn sie durch den Multiplexer durchgeschaltet werden würden. Dies bedeutet, daß der Zeitpunkt, zu dem der Taktgenerator eines der Synchronisationssignale SS1, SS2 oder SS3 empfängt, nicht davon abhängt, welches der Synchronisationssignale er empfängt.

Dadurch kann erreicht werden, daß der Taktsignalgenerator bei einem Wechsel des Synchronisationssignals, unter Verwendung dessen er synchronisiert werden soll, unterbrechungs- und störungsfrei weiterarbeiten kann; das "neue" Synchronisationssignal erreicht den Taktsignalgenerator nämlich genau zu dem Zeitpunkt, zu dem ihn auch das zuvor verwendete "alte" Synchronisationssignal erreicht hätte.

Die zeitliche Verzögerung, die durch die jeweiligen Zeitverzögerungsglieder D1, D2 und D3 bewerkstelligt wird, ist im vorliegend betrachteten Beispiel abhängig von der Laufzeit der betreffenden Synchronisationssignale von den RBS-Einheiten zur RNT-Einheiten, wobei die jeweiligen Laufzeiten wiederum von der Länge der Übertragungswege abhängig sind, die die Synchronisationssignale von den RBS-Einheiten zur RNT-Einheit zurückzulegen haben.

Bezeichnet man die Laufzeit des Synchronisationssignals SS1 von der ersten RBS-Einheit RBS1 zur RNT-Einheit RNT mit T1, die Laufzeit des Synchronisationssignals SS2 von der zweiten RBS-Einheit RBS2 zur RNT-Einheit RNT mit T2, die Laufzeit des Synchronisationssignals SS3 von der dritten RBS-Einheit RBS3 zur RNT-Einheit RNT mit T3, und die maximal mögliche Laufzeit eines Synchronisationssignals in dem betrachteten System (von einer beliebigen RBS-Einheit zur RNT-Einheit) mit Tmax, so lassen die im vorliegend betrachteten Beispiel durch die Zeitverzögerungsglieder D1, D2 und D3 bewirkten zeitlichen Verzögerungen quantitativ wie folgt ausdrücken:

Die durch das Zeitverzögerungsglied D1 bewirkte zeitliche Verzögerung des Synchronisationssignals SS1 beträgt Tmax - T1, die durch das Zeitverzögerungsglied D2 bewirkte zeitliche Verzögerung des Synchronisationssignals SS2 beträgt Tmax - T2, und durch das Zeitverzögerungsglied D3 bewirkte zeitliche Verzögerung des Synchronisationssignals SS3 beträgt Tmax - T3.

Eine derartige Festlegung der durch die Zeitverzögerungsglieder bewirkten Verzögerungen erweist sich nach derzeitigem Kenntnisstand als optimal, weil dadurch bei einer minimalen Verzögerung der Synchronisationssignale beliebige Laufzeitunterschiede der Synchronisationssignale kompensiert werden können. Gleichwohl besteht auf eine derartige Festlegung der Verzögerungszeiten keine Einschränkung; die Verzögerungszeiten können bei Bedarf auch länger oder kürzer gewählt werden.

Die Bestimmung der Laufzeiten T1, T2 und T3 kann auf unterschiedliche Weise erfolgen:

Eine Möglichkeit besteht darin, in der zu synchronisierenden RNT-Einheit die Entfernungen zu den RBS-Einheiten bzw. die jeweiligen Signallaufzeiten abzuspeichern. Dies kommt insbesondere bei ortsfest installierten RNT- und RBS-Einheiten in Frage.

Eine andere Möglichkeit der Laufzeitermittlung besteht darin, daß die Zeit gemessen wird, die zwischen dem Versenden eines Testsignals und dem Empfangen eines Antwortsignals von der durch das Testsignal angesprochenen Einheit gemessen und ausgewertet wird.

Eine weitere Möglichkeit zur Laufzeitermittlung besteht in einer Überwachung und Auswertung der Empfangszeitpunkte der Synchronisationssignale und/oder der Laufzeitunterschiede der Synchronisationssignale und/oder der zeitlichen Veränderung der Empfangszeitpunkte und/oder der Laufzeitunterschiede.

Die Einstellung der durch die Zeitverzögerungsglieder bewirkten Zeitverzögerungen könnte auch dadurch erfolgen, daß die zeitlichen Verzögerungen der gerade nicht zur Synchronisierung verwendeten Synchronisationssignale unter ständiger Vergleichsmessung und Nachregelung so auf das gerade zur Synchronisierung verwendete und beispielsweise um Tmax (oder um einen beliebigen anderen konstanten Wert) verzögerte Synchronisationssignal abgestimmt werden, daß die gerade nicht zur Synchronisierung herangezogenen Synchronisationssignale im Fall eines Synchronisationssignalwechsels genau zum gleichen Zeitpunkt beim Taktgenerator ankämen wie es beim gerade zur Synchronisierung verwendeten Synchronisationssignal der Fall wäre.

Zusammenfassend kann festgestellt werden, daß durch das vorstehend beschriebene Verfahren und die die Durchführung des Verfahrens ermöglichende Vorrichtung auf relativ einfache Art und Weise ermöglicht wird, das Umschalten von Verbindungen zwischen mehreren Sende/Empfangsstationen zuverlässig störungsfrei durchzuführen.

## Patentansprüche

1. Verfahren zum Synchronisieren eines Taktgenerators (TG) einer Sende/Empfangsstation (RNT) unter Verwendung eines empfangenen Synchronisationssignals (SS1, SS2, SS3),
**dadurch gekennzeichnet,**
**daß** das Synchronisationssignal in der Sende/Empfangsstation vor dessen Verwendung zur Synchronisierung eine veränderbare Zeit verzögert wird,
**daß** das Synchronisationssignal, das zum Synchronisieren des Taktgenerators verwendet wird, ein aus mehreren empfangenen Synchronisationssignalen (SS1, SS2, SS3) ausgewähltes Synchronisationssignal ist, und
**daß** die empfangenen Synchronisationssignale (SS1, SS2, SS3) unabhängig voneinander gleich oder unterschiedlich lange verzögert werden.

2. Verfahren nach Anspruch 1,
**dadurch gekennzeichnet,**
**daß** für jedes empfangene Synchronisationssignal (SS1, SS2, SS3) ein das betreffende Synchronisationssignal zeitlich verzögerndes Zeitverzögerungsglied (D1, D2, D3) vorgesehen wird.

3. Verfahren nach Anspruch 1 oder 2,
**dadurch gekennzeichnet,**
**daß** die empfangenen Synchronisationssignale (SS1, SS2, SS3) individuell so lange verzögert werden, daß sie zum gleichen Zeitpunkt zur Synchronisierung verfügbar gemacht werden können.

4. Verfahren nach einem der Ansprüche 1 bis 3,
**dadurch gekennzeichnet,**
**daß** die Synchronisationssignale (SS1, SS2, SS3) in Abhängigkeit von der Laufzeit (T1, T2, T3) verzögert werden, die sie benötigen, um von einer das betreffende Synchronisationssignal versendenden Sende/Empfangsstation (RBS1, RBS2, RBS3) zu der zu synchronisierenden Sende/Empfangsstation (RNT) zu gelangen.

5. Verfahren nach Anspruch 4,
**dadurch gekennzeichnet,**
**daß** die Synchronisationssignale (SS1, SS2, SS3) um Tmax - Tn verzögert werden, wobei Tmax die maximal mögliche Laufzeit und Tn die jeweilige Laufzeit des betreffenden Synchronisationssignals repräsentieren.

6. Verfahren nach einem der vorhergehenden Ansprüche,
**dadurchgekennzeichnet**,
daß der zu synchronisierende Taktgeneratot (TG) verwendet wird, um eine Radio-Network-Termination-Einheit eines nach dem DECT-Standard arbeitenden Funksystems auf eine von mehreren Radio-Base-Station-Einheiten zu synchronisieren.

7. Vorrichtung zum Synchronisieren eines Taktgenerators (TG) einer Sende/Empfangsstation (RNT) unter Verwendung eines empfangenen Synchronisationssignals (SS1, SS2, SS3),**dadurch gekennzeichnet**
**daß** die Vorrichtung mehrere Zeitverzögerungsglieder (D1, D2, D3) umfasst, welche die ihnen zugeführten Synchronisationssignale unabhängig voneinander verzögern;
und **daß** die Vorrichtung eine Auswahlvorrichtung (MUX) umfasst, die das Synchronisationssignal das zum Synchronisieren des Taktgenerators verwendet wird, aus den mehreren verzögerten Synchronisationssignalen (SS1, SS2, SS3) auswählt.

## Claims

1. Method for the synchronization of a clock generator (TG) of a transmitting/receiving station (RNT) by using a received synchronization signal (SS1, SS2, SS3), **characterized in that** the synchronization signal, before being used for the synchronization, is delayed for a variable time in the transmitting/receiving station,
that the synchronization signal which is used for synchronizing the clock generator is a synchronization signal selected from a number of received synchronization signals (SS1, SS2, SS3) and
that the received synchronization signals (SS1, SS2, SS3) are delayed for an equal or a different length of time independently of one another.

2. Method according to Claim 1, **characterized in that**, for each received synchronization signal (SS1, SS2, SS3), a time delay element (D1, D2, D3) delaying the relevant synchronization signal in time is provided.

3. Method according to Claim 1 or 2, **characterized in that** the received synchronization signals (SS1, SS2, SS3) are individually delayed for such a length of time that they can be made available for the synchronization at the same time.

4. Method according to one of Claims 1 to 3, **characterized in that** the synchronization signals (SS1, SS2, SS3) are delayed in dependence on the transit time (T1, T2, T3) needed by them for passing from a transmitting/receiving station (RBS1, RBS2, RBS3) sending out the relevant synchronization signal to the transmitting/receiving station (RNT) to be synchronized.

5. Method according Claim 4, **characterized in that** the synchronization signals (SS1, SS2, SS3) are delayed by Tmax - Tn, where Tmax represents the maximum possible transit time and Tn represents the respective transit time of the relevant synchronization signal.

6. Method according to one of the preceding claims, **characterized in that** the clock generator (TG) to be synchronized is used for synchronizing a radio network termination unit of a radio system operating in accordance with the DECT standard to one of a number of radio base station units.

7. Circuit for the synchronization of a clock generator (TG) of a transmitting/receiving station (RNT) by using a received synchronization signal (SS1, SS2, SS3), **characterized in that** the circuit comprises a number of time delay elements (D1, D2, D3) which, independently of one another, delay the synchronization signals supplied to them; and that the circuit comprises a selection device (MUX) which selects the synchronization signal which is used for synchronization of the clock generator from the number of delayed synchronization signals (SS1, SS2, SS3).

## Revendications

1. Procédé pour synchroniser un générateur d'horloge (TG) d'une station émettrice/réceptrice (RNT) en utilisant un signal de synchronisation reçu (SS1, SS2, SS3), **caractérisé en ce que** le signal de synchronisation est retardé d'un temps variable dans la station émettrice/réceptrice avant d'être utilisé pour la synchronisation, que le signal de synchronisation qui est utilisé pour synchroniser le générateur d'horloge est un signal de synchronisation choisi parmi plusieurs signaux de synchronisation reçus (SS1, SS2, SS3), et que les signaux de synchronisation reçus (SS1, SS2, SS3) sont retardés indépendamment les uns des autres d'une durée égale ou différente.

2. Procédé selon la revendication 1, **caractérisé en ce qu'**un élément de retard (D1, D2, D3) qui applique un retard au signal de synchronisation concerné est prévu pour chaque signal de synchronisation reçu (SS1, SS2, SS3).

3. Procédé selon la revendication 1 ou 2, **caractérisé en ce que** les signaux de synchronisation reçus (SS1, SS2, SS3) sont retardés individuellement jusqu'à ce qu'ils puissent être rendus disponibles au même moment pour la synchronisation.

4. Procédé selon l'une des revendications 1 à 3, **caractérisé en ce que** les signaux de synchronisation (SS1, SS2, SS3) sont retardés en fonction du temps de propagation (T1, T2, T3) qui leur est nécessaire pour parvenir d'une station émettrice/réceptrice (RBS1, RBS2, RBS3) qui émet le signal de synchronisation concerné jusqu'à la station émettrice/réceptrice (RNT) à synchroniser.

5. Procédé selon la revendication 4, **caractérisé en ce que** les signaux de synchronisation (SS1, SS2, SS3) sont retardés de Tmax - Tn, Tmax désignant le temps de propagation maximum possible et Tn désignant le temps de propagation correspondant du signal de synchronisation concerné.

6. Procédé selon l'une des revendications précédentes, **caractérisé en ce que** le générateur d'horloge (TG) à synchroniser est utilisé pour synchroniser un terminal de réseau de radiocommunication d'un système de radiocommunication fonctionnant selon la norme DECT sur une parmi plusieurs unités de station radio de base.

7. Dispositif pour synchroniser un générateur d'horloge (TG) d'une station émettrice/réceptrice (RNT) en utilisant un signal de synchronisation reçu (SS1, SS2, SS3), **caractérisé en ce que** le dispositif comprend plusieurs éléments de retard (D1, D2, D3) qui retardent les signaux de synchronisation qui leur sont acheminés indépendamment les uns des autres, et que le dispositif comprend un dispositif de sélection (MUX) qui sélectionne parmi plusieurs signaux de synchronisation retardés (SS1, SS2, SS3) le signal de synchronisation qui est utilisé pour synchroniser le générateur d'horloge.
